# EUROPEAN PATENT APPLICATION

(11) **EP 4 767 835 A1**
(43) Date of publication of application: **01.07.2026**
(21) Application number: 24856473.4
(22) Date of filing: 21.08.2024
(51) Int. Cl.: A23L 27/00, A23D 7/00, A23D 7/01, A23L 23/00

(54) **OIL-IN-WATER-TYPE EMULSION AND METHOD FOR PRODUCING SAME**

(30) Priority: 23.08.2023 JP 2023135888
(71) Applicant: Fuji Oil Company, Limited, Izumisano-shi Osaka 598-8540 (JP)
(72) Inventor: MIZUSHIMA, Shigeki, Tsukubamirai-shi, Ibaraki 300-2436 (JP)
(74) Representative: Becker, Eberhard
(86) International application number: PCT/JP2024/029621
(87) International publication number: WO 2025/041785

(57) **Abstract**

The purpose of the present invention is to provide an oil-in-water-type emulsion that, by simply adding a small amount thereof, is capable of imparting an oily taste that is a flavor characteristic, such as fat-like richness or fat-like body, and reducing bitterness. It has been found that it is possible to impart an oily taste that is a flavor characteristic, such as fat-like richness or fat-like body, and reduce bitterness, even when a free fatty acid is contained, by using an oil-in-water-type emulsion that contains an oily material containing a free fatty acid, an easily water-soluble substance, water, and a protein material having specific properties, and that has an emulsion particle size of at most 100 nm.

## Description

### Technical Field

The present invention relates to an oil-in-water emulsion and a method for producing the same.

### Background Art

Market needs for low-lipid food products are high because of the recent increase in health awareness. On the other hand, when the amount of lipid is small, the influence on the taste is large, for example, it leads to a bland taste. Thus, improvement in this is desired, that is, an increase in richness.

In recent years, a group of plant-derived food products called a vegan diet or a plant-based food has attracted attention. Compared with animal-derived food products, these food products are often evaluated as having a light flavor even though the amount of lipid is the same, and improvement in a full-bodied taste is demanded.

The richness and full-bodied taste as used herein are general terms for a group of flavor elements not included in the basic five tastes, and an oil taste is an important element in the richness and full-bodied taste. The oil taste is a taste also called a sixth sense of taste, which is exhibited when oil or fat itself is sensed by a receptor, and is expressed as an oil taste or an oil or fat taste. In the present description, the term 'oil taste' is used with this meaning. The oil taste is different from the odor caused with deterioration of flavor components and lipids contained in oil or fat.

Usually, ingested food products are mixed with various digestive liquids in the digestive tract, finely decomposed, and absorbed in the body, and then mainly involved in biological reactions in biological membranes. They are transported as O/W emulsion particles in the digestive process from eating to absorption. In particular, immediately before absorption, it is considered that the particle size becomes finer from a nanoemulsion having a particle size of about nanometer to a mixed micelle. A high uptake percentage of the functional component into the mixed micelle can be regarded as high in vivo absorbability. Functional ingredients in food including polyphenols and carotenoids are known to be effective for maintaining health and preventing diseases, but many of them are unstable against heat, light, oxygen, and the like, and many of them are fat-soluble, that is, oily materials, and therefore have low bioavailability as they are now. It is known that emulsification can improve the absorbability of fat-soluble functional ingredients in food into the living body, and it is also known that the absorption efficiency is improved as the particle size of the emulsified particles is smaller. This is not limited to the functional ingredients in food, and can also be said for the energy efficiency of oil or fat. Thus, the uptake of the nanoemulsion can have a beneficial effect on survival.

Various methods have been studied for an oil taste enhancer.

Patent Document 2 proposes a method of blending an oil-in-water type emulsified oil or fat having an average particle size of emulsion of from 2 µm to 15 µm with a food product using a smaller amount of oil or fat than before.

Patent Document 3 proposes a flavor improving agent for low-fat food products, which contains (E)-6-octenal as an active ingredient.

Patent Document 4 proposes a method for improving the persistence of the flavor of an edible oil or fat in the mouth when the edible oil or fat is eaten, by containing a polyglycerin condensed ricinoleate into the edible oil or fat.

Patent Document 5 proposes a flavor improving agent for a food or beverage product containing free oleic acid as an active ingredient.

Patent Document 6 proposes an emulsion containing a free long-chain fatty acid or a salt thereof and an emulsifier.

### Citation List

### Patent Document

Patent Document 1: PCT/JP2023/003285
Patent Document 2: JP 2012-170449 A
Patent Document 3: JP 2018-22 A
Patent Document 4: JP 2022-22986 A
Patent Document 5: JP 2011-223942 A
Patent Document 6: WO 2010/035704

### Summary of Invention

### Technical Problem

The inventors of the present invention have found that by blending an oil-in-water emulsion that is a nanoemulsion using a specific protein material into a food product, the oil taste of the food product can be improved, and the food product can be simply made delicious (Patent Document 1). However, because a special emulsifying device is used for the nanoemulsion, there is a problem in terms of cost, and it is desired to improve its function.

In addition, in the techniques of Patent Documents 2 and 4, the effect as an oil taste enhancer is insufficient. Patent Document 3 is a technique related to a flavoring, but a method not using a flavoring is desired from the recent market environment in which a synthetic compound is avoided. In addition, the flavor imparted by these methods is not essential because the flavoring is not an element that essentially constitutes a lipid. Further, the addition amount has a pointed value, and there is also a problem that the utilization range is limited due to unintended increase/decrease depending on the food processing process and the preservation method.

Patent Document 5 describes, regarding the effect, that "according to the present invention, it is possible to mask an odor peculiar to vegetable oil or fat, in particular, a bad taste or a sticky sensation of aftertaste, which is called a hydrogenation odor, a reversion odor, a hydrogenation odor or the like strongly possessed by hydrogenated oil or fat", and its object is not to enhance the oil taste. In addition, in the technique of Patent Document 6, because the emulsion containing a free fatty acid is extremely bitter, there is a problem that bitterness is generated to obtain a satisfactory effect.

An object of the present invention is to provide an oil-in-water emulsion that can impart an oil taste having a flavor characteristic such as fat-like richness or a fat-like full-bodied taste, and can suppress bitterness, only by adding a trace amount of the oil-in-water emulsion.

### Solution to Problem

As a result of intensive studies to solve the above problems, the inventors of the present invention have found that the use of an oil-in-water emulsion containing an oily material containing a free fatty acid, a readily water-soluble substance, water, and a protein material having specific properties, the oil-in-water-type emulsion having an emulsion particle size of 100 nm or less, can impart an oil taste such as fat-like richness or a fat-like full-bodied taste and suppress bitterness even though a free fatty acid is used, thereby completing the present invention.

That is, the present invention provides
(1) An oil-in-water emulsion containing an oily material, a readily water-soluble substance, water, and a protein material, the oil-in-water emulsion having an emulsion particle size of 100 nm or less and satisfying requirements (A) and (B) described below:
   (A) the oily material containing at least a free fatty acid;
   (B) the protein material having properties including: a viscosity of 10000 Pa·s or less as measured at 25°C after a 20 mass% aqueous solution, based on crude protein content, is heated at 80°C for 30 minutes; and a 0.22 M TCA solubilization percentage of from 30% to 95%,
(2) The oil-in-water emulsion according to (1), wherein the free fatty acid is one or two or more selected from oleic acid, linoleic acid, palmitic acid, and stearic acid,
(3) The oil-in-water emulsion according to (1), in which the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass%,
(4) The oil-in-water emulsion according to (2), in which the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass%,
(5) The oil-in-water emulsion according to (3), in which the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass% and an oil or fat in an amount of from 1 to 99 mass%,
(6) The oil-in-water emulsion according to (4), in which the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass% and an oil or fat in an amount of from 1 to 99 mass%,
(7) The oil-in-water emulsion according to (1), in which the protein material has an NSI of 80 or more,
(8) The oil-in-water emulsion according to (2), in which the protein material has an NSI of 80 or more,
(9) The oil-in-water emulsion according to (3), in which the protein material has an NSI of 80 or more,
(10) The oil-in-water emulsion according to (4), in which the protein material has an NSI of 80 or more,
(11) The oil-in-water emulsion according to (5), in which the protein material has an NSI of 80 or more,
(12) The oil-in-water emulsion according to (6), in which the protein material has an NSI of 80 or more,
(13) The oil-in-water emulsion according to (1), having a water content of 65 mass% or less,
(14) The oil-in-water emulsion according to (2), having a water content of 65 mass% or less,
(15) The oil-in-water emulsion according to (1), the oily material further containing L-ascorbyl fatty acid ester,
(16) The oil-in-water emulsion according to (2), the oily material further containing L-ascorbyl fatty acid ester,
(17) The oil-in-water emulsion according to (1), in which the oil-in-water emulsion is a plant-based oil-in-water emulsion,
(18) The oil-in-water emulsion according to (2), in which the oil-in-water emulsion is a plant-based oil-in-water emulsion,
(19) A method for producing an oil-in-water emulsion having an emulsion particle size of 100 nm or less, the method including: mixing from 0.5 to 35 mass% of an oily material containing a free fatty acid with a solution containing a protein material in an amount of from 30 to 1200 mass% based on crude protein content relative to the oily material, from 1 to 80 mass% of a readily water-soluble substance, and from 5 to 70 mass% of water; and applying a shear force to a mixture obtained thereby,
(20) The method for producing an oil-in-water emulsion according to (19), in which the protein material has: a viscosity of 10000 mPa·s or less as measured at 25°C after a 20 mass% aqueous solution, based on crude protein content, is at 80°C for 30 minutes; a 0.22 M TCA solubilization percentage of from 30 to 95%; and an NSI of 80 or more,
(21) A food or beverage product containing the oil-in-water emulsion according to (1),
(22) A food or beverage product containing the oil-in-water emulsion according to (2),
(23) An oil flavoring agent for a food or beverage product, the oil flavoring agent containing the oil-in-water emulsion according to (1), and
(24) An oil flavoring agent for a food or beverage product, the oil flavoring agent containing the oil-in-water emulsion according to (2).

In other words, the present invention provides
(1) An oil-in-water emulsion containing an oily material, a readily water-soluble substance, water, and a protein material, the oil-in-water emulsion having an emulsion particle size of 100 nm or less and satisfying requirements (A) and (B) described below:
   (A) the oily material containing at least a free fatty acid;
   (B) the protein material has properties including: a viscosity of 10000 Pa·s or less as measured at 25°C after a 20 mass% aqueous solution, based on crude protein content, is heated at 80°C for 30 minutes; and having a 0.22 M TCA solubilization percentage of from 30% to 95%,
(2) The oil-in-water emulsion according to (1), in which the free fatty acid is one or two or more selected from oleic acid, linoleic acid, palmitic acid, and stearic acid,
(3) The oil-in-water emulsion according to (1) or (2), in which the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass%,
(4) The oil-in-water emulsion according to (3), in which the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass% and an oil or fat in an amount of from 1 to 99 mass%,
(5) The oil-in-water emulsion according to (1), in which the protein material has an NSI of 80 or more,
(6) The oil-in-water emulsion according to (2), in which the protein material has an NSI of 80 or more,
(7) The oil-in-water emulsion according to (1), having a water content of 65 mass% or less,
(8) The oil-in-water emulsion according to (2), having a water content of 65 mass% or less,
(9) The oil-in-water emulsion according to (1) or (2), the oily material further containing L-ascorbyl fatty acid ester,
(10) The oil-in-water emulsion according to (1) or (2), in which the oil-in-water emulsion is a plant-based oil-in-water emulsion,
(11) A method for producing an oil-in-water emulsion having an emulsion particle size of 100 nm or less, the method including: mixing from 0.5 to 35 mass% of an oily material containing a free fatty acid with a solution containing a protein material in an amount of from 30 to 1200 mass% based on crude protein content relative to the oily material, from 1 to 80 mass% of a readily water-soluble substance, and from 5 to 70 mass% of water; and applying a shear force to a mixture obtained thereby,
(12) The method for producing an oil-in-water emulsion according to (11), in which the protein material has: a viscosity of 10000 mPa·s or less as measured at 25°C after a 20 mass% aqueous solution, based on crude protein content, is heated at 80°C for 30 minutes; a 0.22 M TCA solubilization percentage of from 30 to 95%; and an NSI of 80 or more,
(13) A food or beverage product containing the oil-in-water emulsion according to (1) or (2), and
(14) An oil flavoring agent for a food or beverage product, the oil flavoring agent containing the oil-in-water emulsion according to (1) or (2).

### Advantageous Effects of Invention

According to the present invention, it is possible to impart an oil taste to a wide range of aqueous food products, which can contribute to improvement of taste and health promotion.

### Description of Embodiments

### Oil-in-Water Emulsion

An oil-in-water emulsion of the present invention contains an oily material, a readily water-soluble substance, water, and a protein material, has an emulsion particle size of 100 nm or less, and satisfies the following requirements (A) and (B):
(A) the oily material containing at least a free fatty acid;
(B) the protein material has properties including a viscosity of 10000 Pa·s or less as measured at 25°C after a 20 mass% aqueous solution, based on crude protein content, is heated at 80°C for 30 minutes; and having a 0.22 M TCA solubilization percentage of from 30% to 95%.

As described above, the oil-in-water emulsion of the present invention contains a free fatty acid, and this has an effect of enhancing the oil taste. When a free fatty acid is contained in the oil-in-water emulsion having the above configuration, the effect of suppressing the bitterness derived from the free fatty acid is also exhibited.

In an aspect, the oil-in-water emulsion of the present invention can be a plant-based oil-in-water emulsion produced mainly from a plant-derived material, and the oil taste of a food or beverage product can be improved without using an animal-derived food product. The proportion of the plant-derived raw material in the solid content of the plant-based oil-in-water emulsion is preferably 50 mass% or more, and preferably 60 mass% or more, 70 mass% or more, 80 mass% or more, 90 mass% or more, 95 mass% or more, or 100 mass% or more.

In the present invention, the "oil taste" is a flavor that is perceived when an oil or fat is eaten, such as the sense of richness or a full-bodied taste. This "oil taste" is a taste called a sixth sense of taste, which is exhibited when the oil or fat itself is sensed by a receptor.

The emulsion particle size of the oil-in-water emulsion of the present invention is 100 nm or less. When the emulsion particle size is 100 nm or less, an excellent effect of improving the oil taste can be obtained. The emulsion particle size of the oil-in-water emulsion is preferably 95 nm or less, more preferably 93 nm or less, 90 nm or less, 85 nm or less, 80 nm or less, 75 nm or less, 70 nm or less, 65 nm or less, or 60 nm or less.

### (Oily material)

The oily material of the present invention refers to a substance insoluble or poorly soluble in water and easily soluble in neutral lipids, as well as a lipid per se. Examples of the oily material of the present invention include a plant-derived oil or fat such as soybean oil, rapeseed oil, corn oil, safflower oil, rice oil, cottonseed oil, sunflower oil, high oleic sunflower oil, sesame oil, olive oil, peanut oil, palm oil, palm kernel oil, and coconut oil; animal oil or fat such as lard, beef tallow, and fish oil; products obtained by modifying medium chain fatty acid oil or these oils and/or fats through interesterification, hydrogenation treatment, or the like; and free fatty acids.

In an aspect, to produce a plant-based oil-in-water emulsion, a plant-derived oil or fat can be preferably used as the oily material of the present invention.

The lower limit of the amount of the oil or fat in the oily material of the present invention is preferably 1 mass% or more, more preferably 3 mass% or more. More preferably, the lower limit can be 5 mass% or more, 10 mass% or more, 20 mass% or more, 30 mass% or more, 40 mass% or more, 45 mass% or more, 50 mass% or more, 55 mass% or more, 60 mass% or more, 65 mass% or more, or 70 mass% or more. The upper limit of the amount of the oil or fat in the oily material of the present invention is preferably 99 mass% or less, more preferably 97 mass% or less. The upper limit can be further preferably 95 mass% or less, 93 mass% or less, 91 mass% or less, or 90 mass% or less. The lower limit values and the upper limit values can be freely combined. Examples thereof include from 1 to 99 mass%, from 20 to 95 mass%, and from 50 to 95 mass%.

### (Free fatty acid)

The oily material of the present invention contains a free fatty acid. By containing an amount of the free fatty acid, the effect of improving the oil taste can be obtained. The lower limit of the amount of free fatty acid in the oily material of the present invention is preferably 1 mass% or more, more preferably 2 mass% or more. The lower limit can be further preferably 3 mass% or more, 5 mass% or more, or 7 mass% or more. The upper limit of the amount of free fatty acid in the oily material of the present invention is preferably 99 mass% or less, more preferably 95 mass% or less. The upper limit can be further preferably 90 mass% or less, 70 mass% or less, 50 mass% or less, 40 mass% or less, 35 mass% or less, 30 mass% or less, 25 mass% or less, or 20 mass% or less. The lower limit values and the upper limit values can be freely combined. Examples thereof include from 1 to 99 mass%, from 1 to 50 mass%, from 2 to 40 mass%, from 3 to 30 mass%, and from 5 to 20 mass%.

In the present invention, examples of the free fatty acid include polyunsaturated fatty acids such as lauric acid, myristic acid, palmitic acid, oleic acid, linoleic acid, stearic acid, eicosapentaenoic acid, docosahexaenoic acid, arachidonic acid, and γ-linolenic acid. Among these, oleic acid, linoleic acid, palmitic acid, and stearic acid are preferable, and oleic acid and linoleic acid are more preferable from the viewpoint of the effect of improving the oil taste and suppressing bitterness. One of these free fatty acids can be used alone or two or more thereof can be used in combination.

The free fatty acid may be a chemically synthesized product or a hydrolysate of an edible oil or fat. The free fatty acid may be a mixture of another oily material and a free fatty acid.

In the case of a hydrolysate of an edible oil or fat, the origin of the edible oil or fat is not limited, and examples thereof include oil or fat such as soybean oil, rapeseed oil, corn oil, safflower oil, rice oil, cottonseed oil, sunflower oil, high oleic sunflower oil, sesame oil, olive oil, peanut oil, palm oil, palm kernel oil, coconut oil, lard, beef tallow, fish oil, and medium chain fatty acid oil. As the hydrolysis method, enzymatic hydrolysis, chemical hydrolysis, hydrolysis with high temperature or high pressure, or the like can be used. As a method of hydrolysis, hydrolysis using lipase is preferred.

In an aspect, to produce a plant-based oil-in-water emulsion, a hydrolysate of a plant-derived oil or fat can be preferably used as the oily material of the present invention.

The hydrolysate may contain monoglycerin or diglycerin, but the amount of the free fatty acid in the hydrolysate is preferably 50 mass% or more. More preferably, the amount may be 60 mass% or more, 70 mass% or more, 80 mass% or more, 85 mass% or more, 90 mass% or more, or 95 mass% or more.

### (Protein material)

The protein material used in the present invention needs to have a low viscosity after heating (hereinafter, it may be referred to as viscosity after heating). The viscosity after heating can be measured by preparing a 20 mass% aqueous solution of the protein material, based on crude protein content, heating the aqueous solution at 80°C for 30 minutes, and then measuring the viscosity of the aqueous solution at 25°C. The viscosity after heating is 10000 mPa·s or less, preferably 5000 mPa·s or less, 1000 mPa·s or less, or 500 mPa·s or less, more preferably 200 mPa·s or less, or 100 mPa·s or less.

The present protein material is required to have a molecular weight of a certain size. The molecular weight is defined by the TCA solubilization percentage. In the present invention, the TCA solubilization percentage is defined by the ratio of the content of the crude protein dissolved in 0.22 M TCA to the total content of the crude protein. The TCA solubilization percentage of the present protein material is from 30 to 95%. The TCA solubilization percentage can be preferably from 35 to 90%, from 40 to 85%, from 45 to 80% or from 50 to 80%. When the TCA solubilization percentage is too low, the viscosity after heating tends to increase, which may not be appropriate. In addition, the transmittance may decrease.

On the other hand, when the TCA solubilization percentage is too high, the amount of protein contributing to emulsifiability decreases, and it is necessary to blend a large amount of a protein material. Thus, the degree of freedom of blending may decrease.

The present protein material preferably has an NSI (nitrogen solubility index) used as an index of protein solubility of 80 or more. More preferably, the protein material having an NSI of 85 or more, 90 or more, 95 or more, or 97 or more can be used. A high NSI of the protein material indicates high dispersibility in water and can contribute to dispersion stability of the oil-in-water emulsion composition of the present invention. The crude protein content in the protein material is preferably 30 mass% or more. More preferably, the content can be 35 mass% or more, 40 mass% or more, 45 mass% or more, 50 mass% or more, 55 mass% or more, 60 mass% or more, 65 mass% or more, or 70 mass% or more. The protein material having a higher crude protein content can exhibit the function in a smaller amount.

Examples of such protein material include "MIRA-MAP 2.0", available from Fuji Oil Co., Ltd.

Although the origin of the protein material to be prepared is not particularly limited, plant-derived, animal-derived, or microorganism-derived proteins can be used. Examples of the plant-derived protein include proteins derived from beans, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

Examples of the animal-derived protein include egg proteins containing ovalbumin; milk proteins such as casein, whey, lactalbumin, lactalbumin; proteins derived from blood such as plasma, serum albumin, and decolorized hemoglobin; proteins derived from meat; and proteins derived from fish and shellfish. In addition, microorganism-derived proteins such as yeasts, molds and bacteria can be used. Even in a protein having poor solubility in water, a protein material that can be used in the present invention can be prepared by the treatment described below.

In an aspect, to produce a plant-based oil-in-water emulsion, plant-derived proteins can be preferably used as the protein material of the present invention.

### (Denaturation and molecular weight adjustment treatment)

The protein material used in the oil-in-water emulsion of the present invention can be obtained by applying combination of "degradation/denaturation treatment" for degrading and/or denaturing a protein and "molecular weight distribution adjustment treatment" for adjusting molecular weight distribution of the protein. Examples of the "degradation/denaturation treatment" include enzyme treatment, pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combinations thereof. The order and number of operations of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is provided by the "degradation/denaturation treatment, the "molecular weight distribution adjustment treatment" need not be performed. When these treatments are combined and carried out a plurality of times, all the treatments may be carried out continuously from the raw material stage or may be carried with intervals therebetween. For example, a commercially available product that has undergone a certain treatment may be used as a raw material and subjected to another treatment. As long as the above properties are satisfied, the specific protein material may be produced by mixing a protein material that has undergone the molecular weight distribution adjustment treatment with a protein material that has not undergone the molecular weight distribution adjustment treatment. In this case, the ratio of the two protein materials (protein material that has undergone the treatment: protein material that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the protein material used in the oil-in-water emulsion of the present aspect is composed of a protein material that has undergone the "degradation/denaturation and molecular weight distribution adjustment treatments".

In the treatment for degrading or denaturing a protein, conditions such as, for example, the enzyme, the pH, the types and concentrations of an organic solvent and a mineral, the temperature, the pressure, the output intensity, the current, and the time, can be appropriately set by a person skilled in the art. In a case in which an enzyme is used, examples of the enzyme to be used include proteases that are classified into "metal proteases", "acidic proteases", "thiol proteases", and "serine proteases". The reaction can be carried out at a reaction temperature of from 20 to 80°C and preferably of from 40 to 60°C. In the case of a pH adjustment treatment, the treatment can be carried out in a pH range in which any pH values of 2, 2.5, 3, 3.5, 4, 4.5, 5, 5.5, 6, 6.5, 7, 7.5, 8, 8.5, 9, 9.5, 10, 10.5, 11, 11.5, and 12 are set as the upper limit and the lower limit, and for example, the pH range may be from 2 to 12. In the case of an acid treatment, the method may be a method of adding an acid or a method of carrying out fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or beverage product containing an acid, such as a fruit juice of lemon or the like, a concentrated fruit juice, fermented milk, yogurt, or a brewed vinegar. In the case of an alkali treatment, an alkali, such as sodium hydroxide or potassium hydroxide, can be added. In the case of a denaturant treatment, a denaturant, such as guanidine hydrochloride, urea, arginine, or PEG, may be added. In the case of a heating or cooling treatment, examples of the heating temperature include temperature ranges that include any temperatures of 60°C, 70°C, 80°C, 90°C, 100°C, 110°C, 120°C, 125°C, 130°C, 135°C, 140°C, 145°C, and 150°C set as the upper limit and the lower limit, and for example, the temperature range may be from 60°C to 150°C. Examples of the cooling temperature include temperature ranges including any temperatures of -10°C, -15°C, -20°C, -25°C, -30°C, -35°C, -40°C, -45°C, -50°C, -55°C, -60°C, -65°C, -70°C, and -75°C set as the upper limit and the lower limit, and for example, the temperature range may be from -10°C to -75°C. Examples of the heating or cooling time include time ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes set as the upper limit and the lower limit, and for example, the time range may be from 5 seconds to 200 minutes. In the case of a high-pressure treatment, examples of the pressure condition include pressure ranges including any pressures of 100 MPa, 200 MPa, 300 MPa, 400 MPa, 500 MPa, 600 MPa, 700 MPa, 800 MPa, 900 MPa, and 1000 MPa set as the upper limit and the lower limit, and for example, the pressure range may be from 100 MPa to 1000 MPa. In the case of an organic solvent treatment, examples of the solvent to be used include alcohols and ketones, such as, for example, ethanol and acetone. In the case of a mineral addition treatment, examples of the mineral to be used include divalent metal ions, such as calcium and magnesium. In the case of a supercritical treatment, the treatment can be implemented, for example, using carbon dioxide in a supercritical state at a temperature of about 30°C or higher and a pressure of about 7 MPa or higher. In the case of an ultrasonic treatment, the treatment can be carried out, for example, by irradiation at a frequency of from 100 KHz to 2 MHz with an output of from 100 to 1000 W. In the case of an electrolysis treatment, for example, an aqueous protein solution may be treated by application of a voltage of from 100 mV to 1000 mV. In a specific embodiment, the treatment for decomposing and/or denaturing a protein is selected from the denaturant treatment, the heating treatment, and combinations thereof.

In the treatment for adjusting the molecular weight distribution of a protein, conditions such as, for example, the type of filter medium, the carrier for gel filtration, the centrifugal rotation speed, the electric current, and the time, can be appropriately set by a person skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

### (Readily water-soluble substance)

Although a continuous phase of the oil-in-water emulsion of the present invention is an aqueous solution of the above-described protein material, an amount of water at that time is preferably small. In order to reduce water in the aqueous solution, it is necessary to replace water with a readily water-soluble substance. The readily water-soluble substance used in the present invention has a solubility of 30 (g/100 g) or more, preferably 60 (g/100 g) or more, more preferably 100 (g/100 g) or more in water, and most preferably can be mixed and dissolved with water at an arbitrary ratio. The readily water-soluble substance has a boiling point higher than that of water. The substance is preferably an inorganic salt or an organic substance containing no nitrogen, and examples of the organic substance include a polyhydric alcohol containing a saccharide.

The polyhydric alcohol is a generic term for compounds having two or more hydroxyl groups in one molecule, and the type thereof is not particularly limited. Examples thereof include glycerin, propylene glycol, sorbitol, maltitol, xylitol, erythritol, lactitol, sorbitan, xylose, arabinose, mannose, trehalose, lactose, sugar, coupling sugar, glucose, enzyme starch syrup, acid saccharified starch syrup, maltose starch syrup, maltose, isomerized sugar, fructose, reduced maltose, reduced starch syrup, and honey. These may be used alone or in a combination of two or more types thereof.

Examples of the salts include chlorides, nitrates, sulfates, phosphates, and organic acid salts of monovalent or divalent metals such as sodium, potassium, calcium, and magnesium, or with ammonium, which satisfy the above solubility. Sodium chloride, ammonium sulfate, sodium dihydrogen phosphate, sodium lactate and the like can be exemplified.

### (Emulsifier)

In the present invention, it is not necessary to actively blend emulsifiers other than the protein materials described above. In particular, it may be undesirable in terms of quality to contain an emulsifier during an emulsification step.

Herein, when referred to as an emulsifier, examples thereof include synthetic emulsifiers and natural emulsifiers. Specific examples thereof include synthetic emulsifiers such as monoacylglycerol, diacylglycerol, polyglycerin fatty acid ester, sucrose fatty acid ester, sodium stearoyl lactate, calcium stearoyl lactate, polyoxyethylene derivative, fatty acid salt, and processed starch, derivatives of lecithin obtained by chemically or enzymatically treating naturally occurring lecithins such as enzymatically decomposed lecithin, hydrogenated enzymatically decomposed lecithin, hydroxylecithin, phosphatidylglycerol, phosphatidic acid, and acetylated lecithin, and naturally occurring saponins such as soybean saponin and quillajasaponin. Proteins that do not meet the requirements of the protein material described above, for example, milk casein, lactalbumin, and the like that have not been subjected to the treatment according to the present invention are also included in the emulsifier as long as they have emulsifiability.

### (L-ascorbyl fatty acid ester)

In one aspect of the present invention, it is preferable to blend from 0.01 to 0.2 mass% of L-ascorbyl fatty acid ester in the oily material. Since the oxidation stability of the free fatty acid is extremely inferior to that of the fatty acid of the triglyceride form, there is a problem that the free fatty acid is easily affected by oxidation during processing and storage, and a deteriorated odor and a rancid odor of oil or fat are easily generated. The blending of vitamin E as a commonly used antioxidant is poor in the effect of suppressing the oxidation of fatty acids, and the blending of L-ascorbyl fatty acid ester is effective. Examples of the L-ascorbyl fatty acid ester include L-ascorbyl palmitate and L-ascorbyl stearate. When the blending amount of the L-ascorbyl fatty acid ester is within this range, an excellent oxidation inhibiting effect is exhibited. The blending amount of the L-ascorbyl fatty acid ester in the oily material is more preferably from 0.02 to 0.15 mass%, still more preferably from 0.03 to 0.1 mass%.

### (Other Components)

Various substances can be added without affecting the present invention, and they are exemplified below.

Examples thereof include sugars, nutritional components (such as amino acids, vitamins, and minerals), alcoholic beverages, salts, fruit flesh, vegetables, vegetable juice (including concentrate), purees, extract, sweeteners, high-intensity sweeteners (such as sucralose, acesulfame K, aspartame, neotame, saccharin, sodium saccharin, thaumatin, stevia, glycyrrhizin, monellin, alitame, and disodium glycyrrhizinate), bittering agents (such as iso-α-acid, Rho-hop, Hexahop, and Tetrahop), acidulants, colorants (such as safflower yellow, caramel color, gardenia pigment, fruit juice colorants, vegetable colorants, and synthetic colorants), food additives (such as dietary fibers, excipients, pH adjusters, preservatives, antioxidants (such as vitamin C, vitamin E, and extracted tocopherols), thickeners, stabilizers, and gelling agents), and active ingredients or additives of pharmaceuticals, quasi-drugs, or cosmetics.

### (Blending ratio)

The blending will be described below. Although an aqueous phase and an oil phase are separately prepared, finally the blending is performed at the following blending ratio so that the total amount is 100 parts by mass. While it is difficult to prepare the oil-in-water emulsion of the present invention when it is out of the formulation, it is possible to obtain an oil-in-water emulsion having a smaller particle size when the formulation is preferable.

The amount of the oil phase is from 0.5 to 35 parts by mass, preferably from 1 to 30 parts by mass, and more preferably from 2 to 15 parts by mass in terms of an oily material.

The aqueous phase has the following composition. The amount of the protein material is from 30 to 1200 mass%, preferably from 60 to 400 mass% based on crude protein content relative to the oil or fat material. It is also preferable that the crude protein satisfies the following conditions. The crude protein is from 1 to 20 parts by mass, preferably from 5 to 15 parts by mass, and more preferably from 10 to 12 parts by mass per 100 parts by mass of the total amount of the emulsion.

The amount of water is from 5 to 70 parts by mass, preferably 65 parts by mass or less, more preferably 35 parts by mass or less, and most preferably 20 parts by mass or less. The amount of the readily water-soluble substance is from 1 to 80 parts by mass, preferably from 10 to 70 parts by mass, and more preferably from 40 to 65 parts by mass. The total amount of the readily water-soluble substance and water is preferably 2 times by mass or more, more preferably 4 times by mass or more, and most preferably 6 times by mass or more, relative to the protein material.

In addition to the oily material, the protein material, and the readily water-soluble substance, various substances can be added as long as they do not affect the present invention. On the other hand, it is preferable that a substance having a boiling point lower than that of water, for example, lower alcohols or lower hydrocarbons are not contained. Considering the use for food products and the like, it is desirable to avoid these uses as much as possible.

Various emulsifiers dissolved in each of the aqueous phase and the oil phase may be added to the aqueous phase and the oil phase. However, as with lower alcohols, it is one of the characteristics of the present invention that the oil-in-water emulsion of the present invention can be prepared without using these, and considering the use for food products and the like, it is desirable to avoid these uses as much as possible.

### (Preparation of stock solution of emulsion)

A preparation method will be described below, and first, the preparation of the aqueous phase will be described. The protein material and the readily water-soluble substance are added to water, and the aqueous phase is dissolved by stirring or the like. The temperature of water to be used is not particularly limited, and warm water is preferable, and from 60 to 80°C is suitable. When the temperature is low, the viscosity increases and workability deteriorates, and when the temperature is high, an oil-soluble component to be blended may deteriorate. The protein material used in the present invention is characterized by having a low viscosity after heating, and the aqueous phase prepared here also exhibits a low viscosity in spite of a high crude protein concentration.

Next, the preparation of the oil phase will be described. The oil phase is the above-described oily material, but usually, a mixture obtained by adding a free fatty acid and L-ascorbyl fatty acid ester to triglyceride is used. Depending on the fatty acid or the like constituting also the oil phase, warming is preferred, and, in many cases, preparation is carried out at a temperature not lower than a melting point thereof.

### (Emulsification apparatus)

Two liquids of the aqueous phase and the oil phase are mixed. At this time, preliminary emulsification is preferably performed. The preliminary emulsification is to prepare an oil-in-water emulsion having a particle size of about from 10 to 100 µm by treatment with a homomixer, for example. Although the rotation speed varies depending on the apparatus, for example, in the case of HOMOGENIZING MIXER MARK II Model 2.5 available from PRIMIX Corporation, processing at 8000 rpm for about 10 minutes can be exemplified.

Subsequently, main emulsification is performed. Although the emulsification is not particularly limited, an emulsification apparatus having a high shear force is preferable, and examples thereof include a homomixer, a colloid mill, a high-pressure homogenizer, an ultrahigh-pressure homogenizer, and a vacuum emulsifier. Specifically, an APV Gaulin homogenizer (available from APV), a microfluidizer (available from Microfluidex International Corp.), an ultimizer (available from Sugino Machine Limited), a nanomizer (available from NANOMIZER Inc.) or the like can be preferably used.

It is preferable to perform emulsification at a pressure of 50 MPa or more using these high-pressure emulsification apparatuses. When a microfluidizer is exemplified, it is effective to perform shearing treatment twice or more, preferably four times or more, more preferably ten times or more, at pressures of preferably 100 MPa or more, more preferably 150 MPa or more.

In place of the above homogenization treatment machine, for example, a homogenization treatment machine such as an ultrasonic emulsifier may be used. Examples thereof include ultrasonic homogenizers US-600, US-1200T, RUS-1200T, and MUS-1200T (all available from NISSEI Corporation), and ultrasonic processors UIP-2000, UIP-4000, UIP-8000, and UIP-16000 (all available from Hielscher GmbH). These high-power ultrasonic irradiators are used at a frequency of 25 kHz or less, and preferably from 15 to 20 kHz.

The oil-in-water emulsion of the present invention and its raw materials are evaluated by the following procedures.

### <Crude protein content>

The crude protein content is measured by the Kjeldahl method. Specifically, the mass of nitrogen measured by the Kjeldahl method is represented by "mass%" as the crude protein content of a dried product, relative to the weight of the protein material. The nitrogen conversion coefficient is 6.25. Basically, the value is determined by rounding off to the second decimal place.

### <NSI>

To 3 g of a sample, 60 mL of water is added, followed by propeller stirring at 37°C for 1 hour and centrifugation at 1400 × g for 10 minutes to collect a supernatant (I). Subsequently, 100 mL of water is added again to the remaining precipitate, and the mixture is again subjected to the propeller stirring at 37°C for 1 hour, followed by centrifugation to collect a supernatant (II). The supernatants (I) and (II) are combined, and water is added to the mixture to make a total volume of 250 mL. After the mixture is filtered through a filter paper (No. 5), the nitrogen content of the filtrate is measured by the Kjeldahl method. At the same time, the nitrogen content of the sample is measured by the Kjeldahl method, and the ratio of the nitrogen content recovered in the filtrate (water-soluble nitrogen) to the total nitrogen content in the sample is expressed in mass%, which is referred to as NSI. Basically, the value is determined by rounding off to the second decimal place.

### <TCA solubilization percentage>

A TCA-soluble fraction is determined by adding an equal volume of 0.44 M trichloroacetic acid (TCA) to a 2 mass% aqueous solution of a protein material to yield a 0.22 M TCA solution, and measuring the ratio of the soluble nitrogen by the Kjeldahl method. Basically, the value is determined by rounding off to the second decimal place.

### <Viscosity (viscosity after heating)>

The viscosity of the protein material is measured using a B-type viscometer (Type BM, available from Toki Sangyo Co.,Ltd). An protein material aqueous solution of the having a crude protein content of 20 mass% is prepared and placed in a measurement container. After setting a rotor and sealing the container, the container is heated at 80°C for 30 minutes in a hot water bath. Next, the viscosity is measured at 25°C at any rotation speed, the indicated value is read, and the viscosity is calculated by multiplying the read value by the conversion factor corresponding to the rotor number and the rotation speed. (Unit: Pa·s) The measurement value is set as the value after 1 minute. Basically, the rotation speed is set to 60 rpm. For samples with high viscosity, the rotor is changed from No. 1 to No. 4, and the rotation speed is reduced to 6 rpm. The upper limit of measurable viscosity in this measurement is 100000 mPa·s. If the measurement range is exceeded in the rotor No. 4 at a rotation speed of 6 rpm, the viscosity after heating is immediately determined to be 100000 mPa·s or higher.

### (Food or beverage products)

Examples of the food or beverage products to which the oil-in-water emulsion of the present invention can be used include instant foods such as instant noodles, retort foods, and soups; flour products such as breads, pastas, noodles, and cake mixes; confectioneries such as chocolates, biscuits, snacks, and desserts; seasonings such as sauces, curry roux, and dressings; oil or fat food products such as butters, mayonnaises, and margarines; processed milk; milk beverages; yogurts; lactic acid bacteria beverages; dairy products such as cheeses, ice creams, and creams; frozen foods; fish paste products; hams and sausages; and canned foods. However, the food and beverage products are not limited to these examples.

These food or beverage products can be plant-based food and beverage products produced mainly from plant-derived raw materials. The proportion of the plant-derived raw material in the solid content of the plant-based food or beverage products is preferably 50 mass% or more, and preferably 60 mass% or more, 70 mass% or more, 80 mass% or more, 90 mass% or more, 95 mass% or more, or 100 mass% or more.

The oil-in-water emulsion of the present invention can be used as an oil flavoring agent for the food or beverage products exemplified above. The amount of the oil-in-water emulsion of the present invention in the oil flavoring agent of a food or beverage product is preferably 50 mass% or more, and can be 60 mass% or more, 70 mass% or more, 80 mass% or more, 90 mass% or more, or 100 mass% in the solid content of the oil flavoring agent.

### Example

Hereinafter, the present invention will be described in more detail with reference to Examples, but the spirit of the present invention is not limited to these Examples at all. In Examples, "%" and "part" are on a mass basis.

### <Raw Materials>

The raw materials used in Examples and Comparative Examples are as described below.
1) Oil or fat: palm olein, product name "Palm Ace N", available from Fuji Oil Co., Ltd.
2) Oleic acid: product name " LUNAC O-V " available from Kao Corporation, containing 78.3% of oleic acid, 11.2% of linoleic acid, 4.5% of palmitic acid, and 1.2% of lauric acid
3) Linoleic acid: product name "Linoleic acid", available from FUJIFILM Wako Pure Chemical Corporation, 88% or more
4) Palmitic acid: product name "Palmitic acid", available from Kishida Chemical Co., Ltd., 99.5% or more
5) Stearic acid: product name "Stearic acid", available from Kishida Chemical Co., Ltd., 97% or more
6) Free fatty acid prepared through enzymatic hydrolysis of high oleic sunflower oil: prepared by Fuji Oil Co., Ltd. Free oleic acid: 80.5%, free palmitic acid: 5.4%, free stearic acid: 2.8%, free linoleic acid: 5.7%. Total amount of free fatty acids = 96.4%
7) Soybean protein material: product name "MIRA-MAP 2.0", available from Fuji Oil Co., Ltd., crude protein content: 79.3%, TCA solubilization percentage: 61.8%, viscosity after heating: 28 mPa·s, NSI: 98.1
8) Hydrophilic emulsifier A: pentaglycerin monooleate: product name "Sunsoft A-171E", available from Taiyo Kagaku Co., Ltd., HLB: about 13
9) Hydrophilic emulsifier B: sucrose stearate: product name "RYOTO Sugar Ester S-1670", available from Mitsubishi Chemical Corporation, HLB: about 16
10) Lecithin: product name "SLP-white", available from Tsuji Oil Mills co.,Ltd.
11) Polyglycerin condensed ricinoleate: product name "SY GLYSTER CRS-75" available from Sakamoto Yakuhin Kogyo Co., Ltd.
12) Ascorbyl palmitate: product name "L-ascorbyl palmitate", available from DSM
13) Bouillon (western-style soup stock): product name "Maggi Bouillon Additive Free", available from Nestle Japan Ltd., sodium chloride equivalent 52.5 g/100 g Raw materials: salt (produced in Japan), dextrin, yeast extract, sugar, onion, spices

### (Measurement of emulsion particle size)

As a sample, an oil-in-water emulsion or an oil-in-water emulsion-containing aqueous food product was diluted with ion-exchanged water such that the oily material was 0.03%. The particle size of the oil droplets in water was measured as the Z-average (nm), calculated using a Zetasizer Nano-ZS (MODEL ZEN3600, available from Malvern Panalytical Ltd.). The measurement was performed three times at 25°C using 2 g of the sample in a glass cell with a 1-cm optical path. The average of the three measurements was taken as the average emulsion particle size. The setting conditions were as follows.

RI (Material) 1.47, Absorption (Material) 0, Temperature (Dispersant) 25 (°C), Viscosity (Dispersant) 0.887 (cp), RI (Dispersant) 1.33, Equilobration time 60 (sec), Number of runs 10, Run duration 10, Number of measurements 1, Dela between measurements 0 (sec).

### (Examples 1 to 10, Comparative Examples 1 to 14) (Preparation of oil-in-water emulsion)

The oil-in-water emulsion was prepared according to Tables 1 to 3 as follows. That is:
a) Preparation of oil phase: one or a plurality of materials corresponding to the respective formulations of oil phases shown in Tables 1 to 3 were mixed and set to 80°C. The oil phases were prepared by mixing the one or a plurality of materials for 5 minutes using a homomixer (HOMOGENIZING MIXER MARK II, Model 2.5, available from PRIMIX Corporation).
b) Preparation of aqueous phase: Materials corresponding to the respective formulations of aqueous phases shown in Tables 1 to 3 were dissolved in water at 80°C. The aqueous phases were prepared by mixing the materials for 5 minutes using the homomixer.
c) Each of the oil phases prepared in step a) was added to each of the aqueous phases of step b), and the respective mixtures were preliminarily emulsified at 80°C for 5 minutes to have an emulsion particle size of from 10 to 60 um using the homomixer.
d) An oil-in-water emulsion was prepared by treating the mixture in step c) with a high-pressure homogenizer (Microfluidizer available from Microfluidics International Corporation) at the pressure and the number of treatment described in Tables 1 to 3.

The oil-in-water emulsions of Comparative Examples 2 to 6, 8, 10 to 12, and 14 had an emulsion particle size of more than 100 nm.

### (Evaluation of oil-in-water emulsion)

The obtained oil-in-water emulsion was diluted with water to obtain a 1% solution, and evaluated from the viewpoint of oil taste and bitterness.

### (Evaluation criteria for oil taste)

Six skilled panelists performed each evaluation on a reference example (evaluation score = 1 point) of the additive-free group, and evaluated with the average value of the evaluation scores. The higher the score, the stronger the oil taste is perceived, indicating that it is suitable. 3 or more points were determined to be acceptable.
5 points: The oil taste is perceived to be much stronger as compared withthe reference example.
4 points: The oil taste is perceived to be fairly stronger as compared with the reference example.
3 points: The oil taste is to be stronger as compared with the reference example.
2 points: The oil taste is perceived as compared with the reference example, but the oil taste is insufficient.
1 point: The oil taste is not perceived, and is equivalent to that of the reference example.

### (Evaluation criteria for bitterness)

Six skilled panelists performed each evaluation on a reference example (evaluation score = 1 point) of the additive-free group, and evaluated with the average value of the evaluation scores. The higher the score, the more the bitterness is suppressed, indicating that it is suitable. 3 or more points were determined to be acceptable.
5 points: Slight bitterness is perceived as compared with the reference example.
4 points: Weak bitterness is perceived as compared with the reference example.
3 points: Bitterness is perceived as compared with the reference example, but the bitterness is at a level without posing practical problems.
2 points: Strong bitterness is perceived as compared with the reference example.
1 point: Very strong bitterness is perceived as compared with the reference example.

### Overall Evaluation

When all of the evaluation scores of the oil taste and bitterness were 3 or more, they were determined to be acceptable. Among those determined to be acceptable, those having a total score of oil taste and bitterness of 7.5 points or more are more preferable. More preferable ones have 8.0 points or more, and most preferable ones have 8.5 points or more.

**(Table 1)**

| Formulation (%) | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Oil Phase | Oil or fat | 9.5 | 9 | 9 | 9 | 9 | 9 | 8 | 7 | 5 | 2.7 |
| | Oleic acid | 0.5 | 1 | 1 | 1 | 1 | 1 | 2 | 3 | 5 | 0.3 |
| Aqueous Phase | Soy protein material | 10 | 10 | 8 | 9 | 9 | 10 | 10 | 10 | 10 | 10 |
| | Glycerin | 60 | 60 | 62 | 61 | 61 | 60 | 60 | 60 | 60 | 67 |
| | Water | 20 | 20 | 20 | 20 | 20 | 20 | 20 | 20 | 20 | 20 |
| Total | | 100 | 100 | 100 | 100 | 100 | 100 | 100 | 100 | 100 | 100 |
| Emulsification pressure (MPa) | | 150 | 150 | 150 | 150 | 150 | 150 | 150 | 150 | 150 | 150 |
| Number of passing | | 5 | 5 | 5 | 4 | 3 | 2 | 5 | 5 | 5 | 30 |
| Emulsion particle size (nm) | | 58 | 56 | 63 | 73 | 84 | 93 | 51 | 55 | 63 | 38 |
| Oil taste (score) | | 4.0 | 5.0 | 4.5 | 4.3 | 3.7 | 3.2 | 4.0 | 3.5 | 3.0 | 5.0 |
| Bitterness (score) | | 5.0 | 4.5 | 4.5 | 4.5 | 4.5 | 4.5 | 4.0 | 4.0 | 3.5 | 4.5 |
| Overall evaluation | | Acceptable | Acceptable | Acceptable | Acceptable | Acceptable | Acceptable | Acceptable | Acceptable | Acceptable | Acceptable |

**(Table 2)**

| Formulation (%) | | Comparative Example 1 | Comparative Example 2 | Comparative Example 3 | Comparative Example 4 | Comparative Example 5 | Comparative Example 6 |
|---|---|---|---|---|---|---|---|
| Oil Phase | Oil or fat | 10 | 10 | 9 | 9 | - | - |
| | Oleic acid | - | - | 1 | 1 | 10 | 10 |
| Aqueous Phase | Soy protein material | 10 | 10 | 10 | 10 | 10 | 10 |
| | Glycerin | 60 | 60 | 60 | 60 | 60 | 60 |
| | Water | 20 | 20 | 20 | 20 | 20 | 20 |
| Total | | 100 | 100 | 100 | 100 | 100 | 100 |
| Emulsification pressure (MPa) | | 150 | 5 | 150 | 5 | 150 | 5 |
| Number of passing | | 5 | 1 | 1 | 1 | 5 | 1 |
| Emulsion particle size (nm) | | 57 | 521 | 112 | 509 | 120 | 489 |
| Oil taste (score) | | 1.5 | 1.0 | 1.2 | 1.0 | 3.0 | 1.2 |
| Bitterness (score) | | 5.0 | 5.0 | 4.5 | 4.5 | 1.0 | 1.0 |
| Overall evaluation | | Unacceptable | Unacceptable | Unacceptable | Unacceptable | Unacceptable | Unacceptable |

**(Table 3)**

| Formulation (%) | | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|
| Oil Phase | Palm olein | 10 | 10 | 9 | 9 | - | - | 9 | 9 |
| | Oleic acid | - | - | 1 | 1 | 10 | 10 | - | - |
| | Polyglycerin condensed ricinoleate | - | - | - | - | - | - | 1 | - |
| | Lecithin | - | - | - | - | - | - | - | 1 |
| Aqueous Phase | Soy protein material | - | - | - | - | - | - | 10 | 10 |
| | Hydrophilic emulsifier A | 7 | 7 | 7 | 7 | 7 | 7 | - | - |
| | Hydrophilic emulsifier B | 3 | 3 | 3 | 3 | 3 | 3 | - | - |
| | Glycerin | 60 | 60 | 60 | 60 | 60 | 60 | 60 | 60 |
| | Water | 20 | 20 | 20 | 20 | 20 | 20 | 20 | 20 |
| Total | | 100 | 100 | 100 | 100 | 100 | 100 | 100 | 100 |
| Emulsification pressure (MPa) | | 150 | 5 | 150 | 5 | 150 | 5 | 150 | 150 |
| Number of passing | | 5 | 1 | 5 | 1 | 5 | 1 | 5 | 5 |
| Emulsion particle size (nm) | | 54 | 345 | 56 | 437 | 130 | 458 | 59 | 164 |
| Oil taste (score) | | 1.0 | 1.0 | 1.2 | 1.0 | 2.7 | 1.0 | 1.0 | 1.0 |
| Bitterness (score) | | 2.5 | 2.5 | 2.0 | 2.0 | 1.0 | 1.0 | 4.0 | *4.5* |
| Overall evaluation | | Unacceptable | Unacceptable | Unacceptable | Unacceptable | Unacceptable | Unacceptable | Unacceptable | Unacceptable |

As shown in Examples 1 to 10 in Table 1, it can be said that the oil taste can be strongly perceived and bitterness is suppressed by blending a specific amount of oleic acid in the oily material and refining the oleic acid to an emulsion particle size of 100 nm or less. On the other hand, as shown in Comparative Examples 1 to 6, an oil-in-water emulsion containing no fatty acid as the oily material or having a particle size of more than 100 nm was not effective. As shown in Comparative Examples 7 to 12, when the specific soybean protein material of the present invention was not used, the oil taste was weak, and the effect was not obtained. As shown in Comparative Examples 13 and 14, even when a synthetic emulsifier and a soybean protein material were contained, the effect was low when no fatty acid was contained.

### (Examples 11 to 12) Influence of oxidation degradation due to light irradiation

The diluent of the oil-in-water emulsion of each of Examples 1 and 6 was filled in a transparent glass container, and the effect of oxidation degradation was observed when the liquid was held for 48 hours immediately after dilution under the conditions of 25°C and LED light source 4000 Lx. The same evaluation was performed for the oil taste and bitterness in the same manner as in Example 1. The method for evaluating the oxidation odor is shown below. The results are listed in Table 4.

### (Evaluation criteria for oxidation odor)

Six skilled panelists performed each evaluation on a reference example (evaluation score = 5 points) of the additive-free group and dark place storage, and evaluated with the average value of the evaluation scores. The higher the score, the more the oxidation odor is suppressed, indicating that it is suitable. A score of 3 or higher was determined to be acceptable.
5 points: The oxidation odor of lipid is hardly perceived as compared with the reference example.
4 points: The oxidation odor of lipid is slightly perceived as compared with the reference example.
3 points: The oxidation odor of lipid is perceived as compared with the reference example, but the oxidation odor is at a level without posing practical problems.
2 points: A stronger oxidation odor of lipid is perceived as compared with the reference example.
1 point: A very strong oxidation odor of lipid is perceived as compared with the reference example.

**(Table 4)**

| | | Example 11 | Example 12 |
|---|---|---|---|
| | | Oil-in-water emulsion of Example 1 | Oil-in-water emulsion of Example 6 |
| Before light irradiation | Oil taste (score) | 4.0 | 3.2 |
| | Bitterness (score) | 5.0 | 4.5 |
| | Oxidation odor (score) | 5.0 | 5.0 |
| After light irradiation | Oil taste (score) | 4.0 | 3.2 |
| | Bitterness (score) | 5.0 | 4.5 |
| | Oxidation odor (score) | 3.0 | 3.0 |
| | Overall evaluation | Acceptable | Acceptable |

As shown in Table 4, it was confirmed that even when the oil-in-water emulsions of Examples 1 and 6 were irradiated with light, the oxidation odor was at a level with no problem, and the stability was also excellent.

### (Examples 13 to 15)

Oil-in-water emulsions were prepared based on the formulations in Table 5 and evaluated in the same manner as in Example 1. The evaluation results are shown in Table 5.

**(Table 5)**

| Formulation (%) | | Example 13 | Example 14 | Example 15 |
|---|---|---|---|---|
| | Oil or fat | 9 | 9.5 | 9.5 |
| Oil Phase | Linoleic acid | 1 | - | - |
| | Palmitic acid | - | 0.5 | - |
| | Stearic acid | - | - | 0.5 |
| Aqueous Phase | Soy protein material | 10 | 10 | 10 |
| | Glycerin | 60 | 60 | 60 |
| | Water | 20 | 20 | 20 |
| Total | | 100 | 100 | 100 |
| Emulsification pressure (MPa) | | 150 | 150 | 150 |
| Number of passing | | 5 | 5 | 5 |
| Emulsion particle size (nm) | | 56 | 51 | 57 |
| Oil taste (score) | | 5.0 | 3.5 | 3.0 |
| Bitterness (score) | | 4.5 | 3.5 | 3.5 |
| Overall evaluation | | Acceptable | Acceptable | Acceptable |

As shown in Table 5, when fatty acids other than oleic acid were used as well, the evaluation of the oil taste and bitterness was favorable.

### (Examples 16 to 17) Influence of oxidation degradation due to light irradiation

For the oil-in-water emulsions of Examples 14 to 15, the influence of oxidation degradation was examined in the same manner as in Example 11. The results are shown in Table 6.

**(Table 6)**

| | | Example 16 | Example 17 |
|---|---|---|---|
| | | Oil-in-water emulsion of Example 14 | Oil-in-water emulsion of Example 15 |
| Before light irradiation | Oil taste (score) | 3.5 | 3.0 |
| | Bitterness (score) | 3.5 | 3.5 |
| | Oxidation odor (score) | 5.0 | 5.0 |
| After light irradiation | Oil taste (score) | 3.5 | 3.0 |
| | Bitterness (score) | 3.5 | 3.5 |
| | Oxidation odor (score) | 5.0 | 5.0 |
| | Overall evaluation | Acceptable | Acceptable |

### (Examples 18 to 20)

Oil-in-water emulsions were prepared based on the formulations in Table 7 and evaluated in the same manner as in Example 1. The evaluation results are shown in Table 6. As shown in Table 7, when vitamin E or ascorbyl palmitate was added, the evaluation of the oil taste and bitterness was favorable.

**(Table 7)**

| | | Example 18 | Example 19 | Example 20 |
|---|---|---|---|---|
| Oil Phase | Palm olein | 9.5 | 9.5 | 9.5 |
| | Oleic acid | 0.5 | 0.5 | - |
| | Linoleic acid | - | - | 0.5 |
| | Vitamin E | 0.01 | - | - |
| | Ascorbyl palmitate | - | 0.01 | 0.01 |
| Aqueous Phase | Soy protein material | 10 | 10 | 10 |
| | Glycerin | 60 | 60 | 60 |
| | Water | 20 | 20 | 20 |
| Total | | 100 | 100 | 100 |
| Emulsification pressure (MPa) | | 150 | 150 | 150 |
| Number of passing | | 5 | 5 | 5 |
| Emulsion particle size (nm) | | 58 | 57 | 57 |
| Oil taste (score) | | 4.0 | 4.0 | 4.0 |
| Bitterness (score) | | 5.0 | 5.0 | 5.0 |
| Oxidation odor (score) | | 5.0 | 5.0 | 5.0 |
| Overall evaluation | | Acceptable | Acceptable | Acceptable |

### (Examples 21 to 23) Effect of ascorbyl fatty acid ester on oxidation degradation due to light irradiation

For the oil-in-water emulsion of Examples 18 to 20, the influence of oxidation degradation was examined in the same manner as in Example 11. The results are listed in Table 8.

**(Table 8)**

| | | Example 21 | Example 22 | Example 23 |
|---|---|---|---|---|
| | | Oil-in-water emulsion of Example 18 | Oil-in-water emulsion of Example 19 | Oil-in-water emulsion of Example 20 |
| Before light irradiation | Oil taste (score) | 4.0 | 4.0 | 4.0 |
| | Bitterness (score) | 5.0 | 5.0 | 5.0 |
| | Oxidation odor (score) | 5.0 | 5.0 | 5.0 |
| After light irradiation | Oil taste (score) | 4.0 | 4.0 | 4.0 |
| | Bitterness (score) | 5.0 | 5.0 | 5.0 |
| | Oxidation odor (score) | 3.0 | 5.0 | 3.0 |
| | Overall evaluation | Acceptable | Acceptable | Acceptable |

As understood from Examples 21 to 23, it can be said that the quality of the nanoemulsion composition as an oil flavoring agent having improved oxidation stability is improved by blending L-ascorbyl fatty acid ester in the oil phase of the oil-in-water emulsion containing oleic acid or linoleic acid in advance.

### (Example 24) Effect of free fatty acid prepared through enzymatic hydrolysis of high oleic sunflower oil

High oleic sunflower oil in an amount of 100 parts (High Ole 75B, available from Fuji Oil Co., Ltd.), 100 parts of water, 0.1 parts of Lipase GS "Amano" 250G (purified lipase agent derived from Penicillium camemberti strain), and 2 parts of Lipase AY "Amano" 30SD (purified lipase agent derived from genus Candida) were mixed using a propeller stirrer under a nitrogen atmosphere, and subjected to an enzyme reaction at 40°C for 30 hours. This was centrifuged (2000 × g, 10 min) to recover the oil phase, and heated at 110°C for 10 minutes under reduced pressure of 10 Torr to perform dehydration and enzyme deactivation, whereby a free fatty acid prepared through enzymatic hydrolysis of high oleic sunflower oil was obtained.

Using the free fatty acid, an oil-in-water emulsion was obtained in the same manner as in Example 1 according to the formulation in Table 9, and evaluated in the same manner as in Example 1. The results are listed in Table 9.

**(Table 9)**

| Formulation (%) | | Example 24 |
|---|---|---|
| Oil Phase | Oil or fat | 9 |
| | Free fatty acid derived from high oleic sunflower oil | 1 |
| Aqueous Phase | Soy protein material | 10 |
| | Glycerin | 60 |
| | Water | 20 |
| Total | | 100 |
| Emulsification pressure (MPa) | | 150 |
| Number of passing | | 5 |
| Emulsion particle size (nm) | | 58 |
| Oil taste (score) | | 5 |
| Bitterness (score) | | 4.5 |
| Overall evaluation | | Acceptable |

In the free fatty acid prepared through enzymatic hydrolysis of high oleic sunflower oil, both oil taste and bitterness were favorable.

### (Examples 25 to 29, Comparative Examples 15 to 20) (Application in food)

Using the oil-in-water emulsion of each of Examples and Comparative Examples, Bouillon and the oil-in-water emulsion were put in hot water at 85°C with the formulation in Table 8, and stirred with a spatula to be uniformly dissolved, whereby a consomme soup as oil-in-water emulsion-containing aqueous food product was prepared. Thereafter, the oil taste and bitterness were evaluated in the same manner. The results are shown in Table 10.

**(Table 10)**

| Formulation (%) | Example 25 | Example 26 | Example 27 | Comparative Example 15 | Comparative Example 16 | Example 28 | Comparative Example 17 | Comparative Example 18 | Comparative Example 19 | Comparative Example 20 | Example 29 |
|---|---|---|---|---|---|---|---|---|---|---|---|
| Bouillon (western-style soup stock) | 2 | 2 | 2 | 2 | 2 | 2 | 2 | 2 | 2 | 2 | 2 |
| Dil-in-water emulsion of Example 2 | 1 | - | - | - | - | - | - | - | - | - | - |
| Oil-in-water emulsion of Example 8 | - | 0.33 | - | - | - | - | - | - | - | - | - |
| Oil-in-water emulsion of Example 14 | - | - | 2 | - | - | - | - | - | - | - | - |
| Oil-in-water emulsion of Comparative Example 1 | - | - | - | 1 | - | - | - | - | - | - | - |
| Oil-in-water composition of Comparative Example 2 | - | - | - | - | 1 | - | - | - | - | - | - |
| Dil-in-water emulsion of Example 5 | - | - | - | - | - | 1 | - | - | - | - | - |
| Oil-in-water emulsion of Comparative Example 3 | - | - | - | - | - | - | 1 | - | - | - | - |
| Oil-in-water emulsion of Comparative Example 4 | - | - | - | - | - | - | - | 1 | - | - | - |
| Oil-in-water emulsion of Comparative Example 5 | - | - | - | - | - | - | - | - | 1 | - | - |
| Oil-in-water emulsion of Comparative Example 9 | - | - | - | - | - | - | - | - | - | 1 | - |
| Oil-in-water emulsion of Example 19 | - | - | - | - | - | - | - | - | - | - | 1 |
| Hot water | 97 | 97.67 | 96 | 97 | 97 | 97 | 97 | 97 | 97 | 97 | 97 |
| Total | 100 | 100 | 100 | 100 | 100 | 100 | 100 | 100 | 100 | 100 | 100 |
| Oil taste (score) | 5.0 | 4.0 | 4.0 | 1.5 | 1.5 | 3.7 | 1.5 | 1.5 | 3.0 | 1.5 | 5.0 |
| Bitterness (score) | 5.0 | 4.5 | 4.0 | 5.0 | 5.0 | 5.0 | 5.0 | 5.0 | 1.5 | 2.5 | 4.5 |
| Overall evaluation | Acceptable | Acceptable | Acceptable | Unacceptable | Unacceptable | Acceptable | Unacceptable | Unacceptable | Unacceptable | Unacceptable | Acceptable |

As understood from Examples and Comparative Examples in Table 10, it can be said, for food products as well, that the oil taste can be strongly perceived and bitterness is suppressed by blending a specific amount of free fatty acid in the oily material and refining the free fatty acid to an emulsion particle size of 100 nm or less.

### Industrial Applicability

According to the present invention, it is possible to impart an oil taste to a wide range of aqueous food products, which can contribute to improvement of taste and health promotion.

## Claims

1. An oil-in-water emulsion comprising an oily material, a readily water-soluble substance, water, and a protein material, the oil-in-water emulsion having an emulsion particle size of 100 nm or less and satisfying requirements (A) and (B) described below:
(A) the oily material containing at least a free fatty acid;
(B) the protein material having properties including: a viscosity of 10000 Pa·s or less as measured at 25°C after a 20 mass% aqueous solution, based on crude protein content, is heated at 80°C for 30 minutes; and a 0.22 M TCA solubilization percentage of from 30% to 95%.

2. The oil-in-water emulsion according to claim 1, wherein the free fatty acid is one or two or more selected from oleic acid, linoleic acid, palmitic acid, and stearic acid.

3. The oil-in-water emulsion according to claim 1, wherein the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass%.

4. The oil-in-water emulsion according to claim 2, wherein the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass%.

5. The oil-in-water emulsion according to claim 3, wherein the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass% and an oil or fat in an amount of from 1 to 99 mass%.

6. The oil-in-water emulsion according to claim 4, wherein the oil-in-water emulsion contains the oily material in an amount of from 0.5 to 35 mass%, the readily water-soluble substance in an amount of from 1 to 80 mass%, the water in an amount of from 5 to 70 mass%, and the protein material in an amount of from 30 to 1200 mass% based on crude protein content relative to the oily material, and in (A), the oily material contains the free fatty acid in an amount of from 1 to 99 mass% and an oil or fat in an amount of from 1 to 99 mass%.

7. The oil-in-water emulsion according to claim 1, wherein the protein material has an NSI of 80 or more.

8. The oil-in-water emulsion according to claim 2, wherein the protein material has an NSI of 80 or more.

9. The oil-in-water emulsion according to claim 3, wherein the protein material has an NSI of 80 or more.

10. The oil-in-water emulsion according to claim 4, wherein the protein material has an NSI of 80 or more.

11. The oil-in-water emulsion according to claim 5, wherein the protein material has an NSI of 80 or more.

12. The oil-in-water emulsion according to claim 6, wherein the protein material has an NSI of 80 or more.

13. The oil-in-water emulsion according to claim 1, having a water content of 65 mass% or less.

14. The oil-in-water emulsion according to claim 2, having a water content of 65 mass% or less.

15. The oil-in-water emulsion according to claim 1, the oily material further containing an L-ascorbyl fatty acid ester.

16. The oil-in-water emulsion according to claim 2, the oily material further containing an L-ascorbyl fatty acid ester.

17. The oil-in-water emulsion according to claim 1, wherein the oil-in-water emulsion is a plant-based oil-in-water emulsion.

18. The oil-in-water emulsion according to claim 2, wherein the oil-in-water emulsion is a plant-based oil-in-water emulsion.

19. A method for producing an oil-in-water emulsion having an emulsion particle size of 100 nm or less, the method comprising: mixing from 0.5 to 35 mass% of an oily material containing a free fatty acid with a solution containing a protein material in an amount of from 30 to 1200 mass% based on crude protein content relative to the oily material, from 1 to 80 mass% of a readily water-soluble substance, and from 5 to 70 mass% of water; and applying a shear force to a mixture obtained thereby.

20. The method for producing an oil-in-water emulsion according to claim 19, wherein the protein material has: a viscosity of 10000 mPa·s or less as measured at 25°C after a 20 mass% aqueous solution, based on crude protein content, is heated at 80°C for 30 minutes; a 0.22 M TCA solubilization percentage of from 30 to 95%; and an NSI of 80 or more.

21. A food or beverage product comprising the oil-in-water emulsion according to claim 1.

22. A food or beverage product comprising the oil-in-water emulsion according to claim 2.

23. An oil flavoring agent for a food or beverage product, the oil flavoring agent comprising the oil-in-water emulsion according to claim 1.

24. An oil flavoring agent for a food or beverage product, the oil flavoring agent comprising the oil-in-water emulsion according to claim 2.
